# EUROPEAN PATENT SPECIFICATION

(11) **EP 2 944 519 B1**
(45) Date of publication and mention of the grant of the patent: **18.10.2017**
(21) Application number: 15167627.7
(22) Date of filing: 13.05.2015
(51) Int. Cl.: B60R 13/02

(54) **INJECTION MOULDED PANEL**
SPRITZGEGOSSENES PANEEL
PANNEAU MOULÉ PAR INJECTION

(30) Priority: 14.05.2014 GB 201408569
(43) Date of publication of application: 18.11.2015
(73) Proprietor: Nissan Motor Manufacturing (UK) Ltd., Cranfield Bedfordshire MK43 0DB (GB)
(72) Inventor: Lusted, Ian Mark Wyndham, Bedfordshire, MK43 0DB (GB); Cox, Roy, Bedfordshire, MK43 0DB (GB)

(56) References cited:
- DE-A1- 3 634 269
- DE-U1- 8 412 555
- US-A- 4 852 178
- US-A1- 2012 187 722
- US-B1- 6 508 325

## Description

### Technical Field of the Invention

The present invention relates to a combination of an injection moulded panel and an article secured thereto by a mounting integral to the panel; and to a vehicle incorporating such a combination.

### Background to the Invention

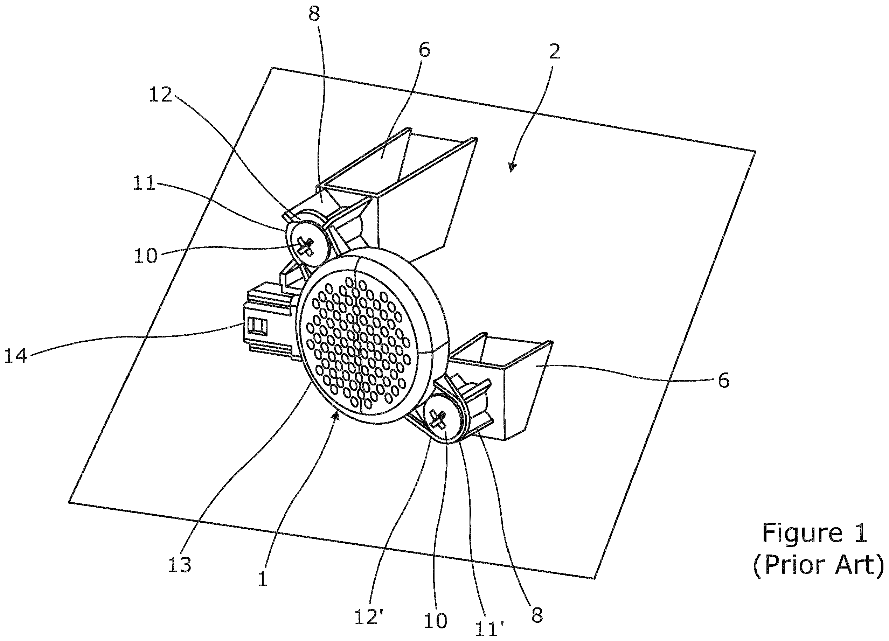

It is known to use injection moulded panels to form part of the interior trim of a vehicle. Such panels are often used to encase various pieces of equipment used in the vehicle. For example, it is known to use an injection moulded panel to form all or part of a vehicle dashboard, behind which various articles are mounted which will typically include a number of electrical components. For convenience, low mass articles which do not have to be secured to the main body of the vehicle are often mounted to an inner surface of vehicle trim panels. Figure 1, for example, illustrates a prior art arrangement for mounting an audible warning device in the form of a buzzer 1 to the interior surface of an injection moulded panel 2; which forms part of the dashboard of a vehicle.

The panel 2 is injection moulded from a plastics material, which may be a polymeric material such as polypropylene, acrylonitrile-butadiene-styrene, phenyl ether polymers and the like. Integrally moulded on an inner surface of the panel 2 are a pair of support lugs 6, each having a screw connection 8 located on the outer end. The screw connections 8 are adapted to receive respective screw fasteners 10.

The buzzer 1 includes a main circular housing 13 in which the buzzer itself is located, and an extension 14 for receiving an electrical connection to connect the buzzer with the electrical harness of the vehicle. Located on opposed sides of the main housing 13 are mounting flanges 11, 11' having respective circular apertures 12, 12'. In order to secure the buzzer 1 in place on the panel 2, screws 10 are inserted through the respective apertures 12, 12' in flanges 11, 11'; and are fastened into respective screw connections 8.

Whilst the known arrangement for securing the buzzer 1 to the panel 2 is effective, it has a number of drawbacks. The integrally moulded support lugs 6 and screw connections 8 are large, requiring use of a significant amount of material; and are complex to mould. The method of mounting the buzzer 1 using a pair of screws is complex, requiring the buzzer 1 to be correctly located, and the screws 10 to be inserted and tightened. This requires the use of two hands. The panel must also be supported in a jig to hold it steady whilst the buzzer 1 is attached. The use of a pair of screw fasteners 10 increases the overall number of components required. Furthermore, in the known arrangement the buzzer 1 can be mounted to the panel 2 in more than one orientation; thus allowing for incorrect mounting, which then has to be rectified.

US 4,852,178 discloses a speaker grille with latches which secure a speaker to the grille by engagement with a retaining ring. Both the speaker grille and the retaining ring are complex mouldings with several split lines.

There is a need then, for an improved arrangement for mounting articles to an injection moulded panel; which overcomes, or at least mitigates, the drawbacks of the prior art.

There is a need in particular, for an improved injection moulded panel incorporating an integral mounting arrangement which uses less material; and/or which is simpler to use; and/or which requires the use of fewer parts to mount an article to the panel.

### Summary of the Invention

According to a first aspect of the present invention, there is provided a combination of an injection moulded panel (100) and an article (1) mounted to the panel, the panel comprising an integrally moulded mounting for securing the article to the panel, wherein the mounting comprises a pair of spaced mounting members for engagement with the article; wherein at least one of the mounting members is configured to apply a resilient biasing force to the mounted article in use, so as to hold the article in engagement with the other mounting member; characterized in that: each mounting member is configured to be insertable through a mounting aperture (12, 12') in respective mounting portions (11, 11') of said mounted article (1).

One of the mounting members may comprise a detent engageable with a first mounting portion of the mounted article.

One of the mounting members may comprise a resilient clip engageable with a second mounting portion of said mounted article.

In embodiments wherein one of the mounting members comprises a detent, the detent may be generally hook shaped, having an elongate shank and a head on a free end of the shank extending outwardly from the shank in a first direction. The resilient clip may be configured in use to generate a biasing force acting generally in a second direction opposite the first direction when biased inwardly towards the detent from a neutral rest position. In some embodiments the resilient clip comprises a resilient arm having a head portion on its free end, the head portion projecting outwardly from the arm generally in the second direction opposite from the first direction.

In some embodiments, the spaced mounting members are each located on a support moulded integrally to a surface of the panel. In such embodiments, there may be provided a bridging member connecting the supports.

The mounting may comprise an abutment located between the mounting members for engagement with a surface of the article mounted to the panel so as to place the article in tension between the mounting members.

The mounting may comprise at least one abutment for engaging a surface of the mounted article to limit the movement of the article in a direction perpendicular to the surface.

In embodiments wherein there is provided a bridging member, the or each abutment may be integrally formed with the bridging member. In such embodiments, the at least one abutment may comprise a protrusion located at an edge of the bridging member.

In some embodiments, the mounting is configured such that the mounted article may only be secured to the panel in a single orientation.

The mounting may be configured to secure the article to the panel with a snap fit.

The panel may an interior trim panel for a vehicle such as a dashboard panel, for example.

The mounted article may comprise a first mounting portion and a second mounting portion, each mounting member being engaged with a respective one of the mounting portions; wherein at least one of the mounting members applies a biasing force to the mounted article to hold the article in engagement with the other of the mounting members.

In some embodiments, a first mounting aperture is defined in the first mounting portion of the article and a second mounting aperture is defined in the second mounting portion of the article, each mounting member being inserted in the mounting aperture of its respective mounting portion.

The mounting may comprise an abutment located between the first and second mounting members, a surface of the article being engaged by the abutment such that the article is held under tension between the first and second mounting members.

The mounting and article may be configured such that the article can only be mounted in a single orientation.

The article may have a low mass. The article may be an audible warning device such as a buzzer, for example.

According to a second aspect of the present invention, there is provided a vehicle comprising a combination of a panel and an article in accordance with the first aspect of the present invention.

### Detailed Description of the Invention

In order that the invention may be more clearly understood, an embodiment thereof will now be described, by way of example only, with reference to the remaining accompanying drawings, of which:
- Figure 2: is a perspective view of an embodiment of the injection moulded panel of the present invention;
- Figure 3: is an enlarged perspective view from underneath of the panel of Figure 2, along arrow III; and
- Figures 4A-4C: are a series of perspective views of the embodiment shown in Figures 2 and 3, illustrating the operational use of the injection moulded panel of the present invention.

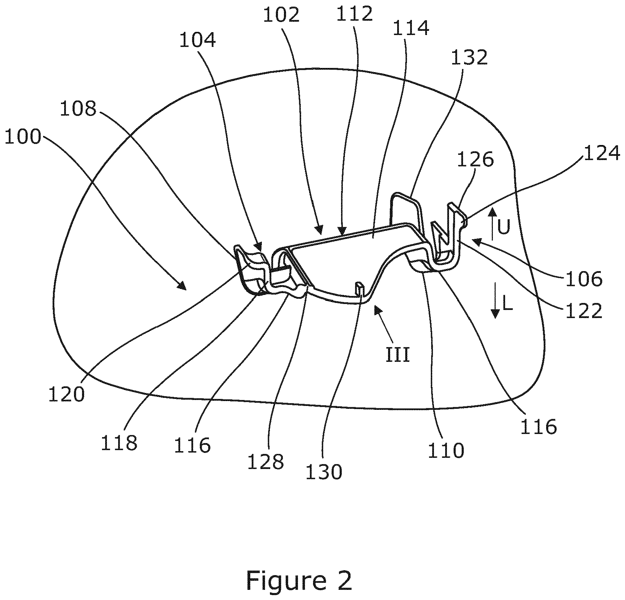

Relative directional terms such as upper and lower as used herein, refer to the orientation of the panel as shown in the drawings and as illustrated by arrows U and L in Figure 2, and should be construed accordingly. It will be appreciated, however, that the panel, fastening means and article could be used in other orientations.

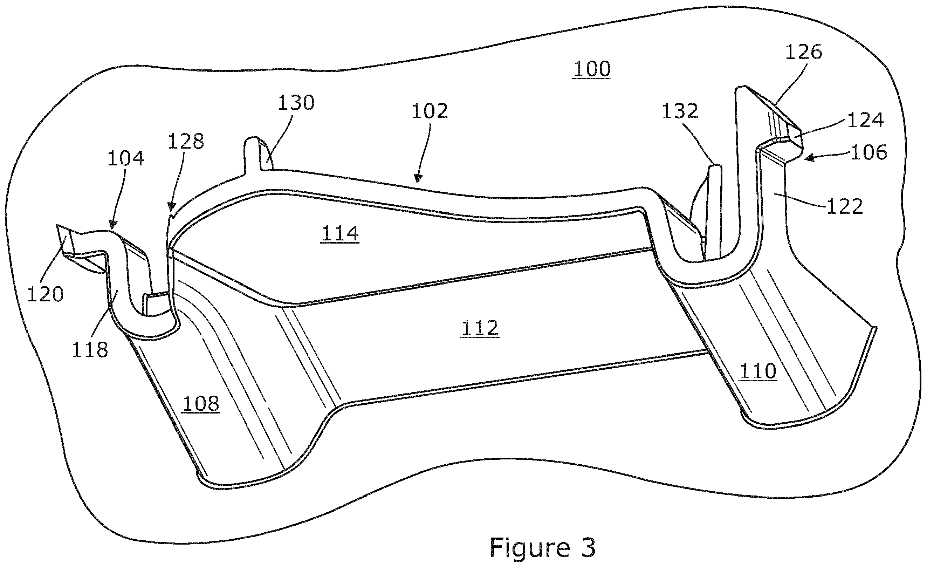

An embodiment of an injection moulded panel 100 of the present invention is shown in Figures 2 and 3. Panel 100 can be made of any suitable plastics material, including, but not limited, to polymeric materials such as: polypropylene, acrylonitrile-butadiene-styrene, phenyl ether polymers and the like.

The panel 100 has an integrally moulded mounting 102 for mounting an article such as buzzer 1 to the panel. The mounting 102 is particularly suitable for securing low mass articles to the panel. The term "low mass" in this regard refers to articles having a mass of typically 100 grammes or less. It will be appreciated that low mass articles are subject to relatively low levels of inertia when the vehicle changes velocity; and so can be safely mounted to a trim panel. Higher mass articles may have to be more securely connected to the bodywork of the vehicle for safety reasons.

The mounting 102 includes a first mounting member 104 in the form of a detent, and a second mounting member 106 in the form of a resilient clip. The first and second mounting members 104, 106 are spaced apart; and each is formed integrally with a respective support 108, 110 on an inner surface of the panel 100. Extending between the first and second mounting members and the supports 108, 110 is bridging member 112.

The bridging member 112 has a substantially planar ledge portion 114 extending in a plane at an angle of around sixty degrees to the inner surface of the panel 100; although in other applications, it could be orthogonal thereto. At either end of the ledge 114, there is a downwardly directed flange 116, each flange being connected with a respective one of the supports 108, 110. The first mounting member or detent 104 includes an elongate arm or shank portion 118 which is spaced outwardly from the surface of the panel 100. A lower end of the shank portion 118 is connected to its support 108. The detent has a head 120 which projects from the free, upper end of the shank 118 in a first direction, outwardly away from the bridging member 112. The detent 104 has a generally hook-like shape and is generally rigid, although by the nature of the material from which it is made, may have some degree of resilience.

The resilient clip 106 includes a resilient arm 122 spaced from the inner surface of the panel 100; and which is connected at a lower end to its support 110. The upper end of the arm 122 has a head portion 124 which extends outwardly away from the bridging member 112 in a second direction generally opposed to the first direction. The upper surface 126 of the head is tapered, angling downwardly and outwardly. The arm 122 can be deflected inwardly towards the detent 104, away from its natural, resiliently biased rest position as shown in Figures 2 and 3. When deflected in this way, the resilience of the material tends to bias the arm 122 back to its rest position, generating a bias force acting in the second direction.

A number of abutments are formed integrally with the bridging member 112 for contact with the buzzer 1 when mounted. A first abutment 128 is in the form of an elongate rib on the upper surface of the ledge portion, extending in a direction at an angle to the inner surface of the panel 100. As will be discussed in more detail later, the rib 128 engages a lower surface of the buzzer when it is mounted, to hold the buzzer in tension between the detent 104 and the resilient clip 106. A second abutment in the form of protrusion 130 extends upwardly from an edge region of the ledge 114 of the bridging member 112; and a third abutment means in the form of protrusion 132 extends from an edge region of the ledge 114 opposed to the edge carrying protrusion 130.

Buzzer 1 is identical to the buzzer 1 as illustrated in Figure 1, and as previously described. The buzzer has a circular main housing with a pair of diametrically opposed mounting lugs 11, 11', each lug having a mounting aperture 12, 12' located therein. Rather than securing the buzzer 1 by means of screws inserted through the apertures 12 as in the prior art, in the panel 100 according to the invention, the detent 104 and the resilient clip 106 are each inserted into a mounting aperture 12 in a respective one of the lugs 11.

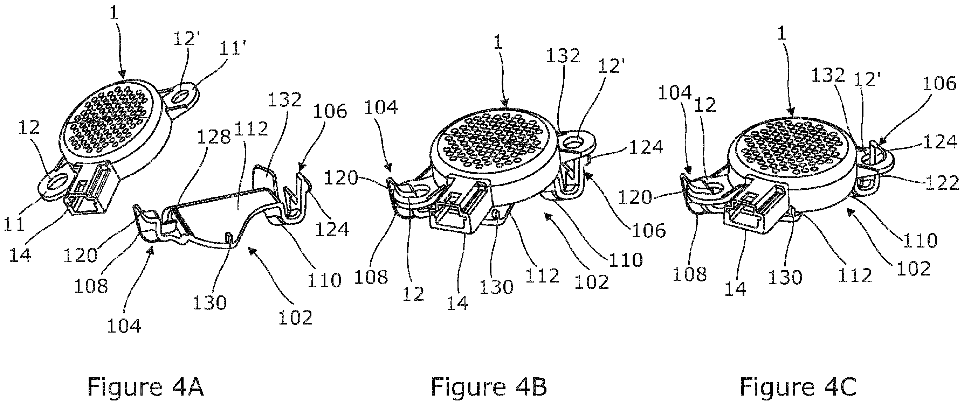

A method of mounting the buzzer 1 onto the injection moulded panel 100 using mounting 102 will now be described with reference to Figures 4A to 4C.

With the buzzer 1 held in a desired orientation, which in this case has electrical connector 14 projecting outwardly on the left as shown in Figure 4A, the head 120 of detent 104 is inserted through the aperture 12 in one of the lugs 11. In doing so, head 120 of the detent engages over the upper surface of an outer portion of the lug 11; and the surface of the lug 11 at the outer edge of aperture 12 engages with the shank 118. The buzzer 1 is subsequently rotated to move the other lug 11' towards the clip member 106.

The mounting 102 is dimensioned relative to the buzzer 1, such that the spacing between the detent 104 and the resilient clip 106 when clip 106 is in its rest position, is slightly larger than the spacing between the outer edges of the apertures 12, 12' in the lugs 11, 11'. As the second lug 11' is brought close to the clip 106 (Figure 4B), the part of the second lug 11' on the outside of the aperture 12' engages with the tapered head 124 of the clip; and a downward pressure applied to the buzzer causes the spring clip 106 to be deflected inwardly away from its rest position. Eventually, the clip is deflected sufficiently that the head 124 is able to pass through the aperture 12' in the second lug 11'. Once the head 124 has passed through the lug 11', the resilience in the arm 122 causes it to move back towards its rest position until the arm 122 contacts the surface of the second lug 11' at the outer edge of the aperture 12'. This occurs before the arm 122 reaches its neutral rest position, so that the resilient clip 106 applies a biasing force to the buzzer 1 in the second direction; so holding the first lug 11 firmly in contact with the shank 118 of the detent 104. In addition, once the buzzer 1 is engaged with the resilient clip 106, a lower surface of the buzzer contacts the rib 128. This deflects the buzzer 1, placing it in tension between the detent 104 and the resilient clip 106, ensuring that the buzzer 1 is securely held in position without rattling.

Once the buzzer 1 is clipped into place, the heads 120, 124 of the detent and of the resilient clip overlie the portions of their respective mounting lugs 11, 11' on the outside of the mounting apertures 12, 12'; and thus prevent the buzzer 1 from sliding off the mounting members. For use with an article such as buzzer 1 where the mounting holes 12 are circular, the outer surfaces of the shank portion 118 of detent 104 and of the resilient arm 122 may be curved to match the curvature of the apertures 12, to ensure a close fit.

The protrusions 130, 132 are located so as to engage opposing surfaces of the buzzer 1 as shown in Figure 4C, to prevent movement of the buzzer 1 with respect to the panel 100 in directions perpendicular to those surfaces. The protrusions 130, 132 are also operable to prevent buzzer 1 from being mounted onto panel 100 in a different orientation to the one shown in Figure 4C. If the buzzer is rotated though 180 degrees, the connector extension 14 will be obstructed by the protrusion 132, preventing the resilient clip 106 from being engaged. Alternatively, if the buzzer 1 is inverted, the main housing will contact the ledge 114, preventing the resilient clip 106 from being engaged with the lug 11'; so that the buzzer cannot be mounted upside down.

Buzzer 1 may be subsequently removed from panel 100 if desired. To achieve this, clip member 106 is pushed inwards so that the extended head 124 of the clip member 106 no longer engages the upper surface of flange 11'; allowing the clip member 106 to be removed from within the aperture 12'; and by subsequently rotating the buzzer 1 in the opposite sense to the direction described above, to disengage the buzzer 1 from the detent 104.

The panel 100 in accordance with the invention provides an integrally formed mounting 102 for attachment of a low mass article which is simple to use, requiring only a snap fit with no additional fastenings such as screws. Mounting of an article 1 can be carried out singlehandedly, such that the panel 100 can be held steady using the person's other hand whilst the article is mounted. This eliminates the need for a jig to hold the panel. The mounting 102 can be configured so that the article 1 can only be mounted in a desired orientation, thus reducing the likelihood of incorrect fitment; and uses less material than the prior art arrangements. It is advantageous that the mounting 102 can be used to mount an existing buzzer 1, making use of the same mounting features 11, 12. The innovative panel and mounting arrangement can thus be adopted for mounting existing articles such as buzzer 1 that have been designed for securement in position using screw fasteners.

A panel 100 in accordance with the invention, having a mounting 102, can be used to mount a range of articles having the same general footprint with mounting apertures 12 on the same pitch circle diameter. For example, a range of different buzzers 1 or other audible warning devices can be produced with housings having the same general footprint such that they can be mounted using the same mounting 102. This would allow a single panel design to be adopted in a range of vehicles where slightly different audible warning devices 1 are to be used. Other relatively low mass articles could also be mounted using the same or a similar mounting 102. It will also be appreciated that the basic mounting arrangement comprising integrally moulded first and second mounting members 104, 106 could be adapted to mount differently sized or shaped articles. It will also be appreciated that the mounting 102 can be configured by use of suitable abutments so that any given article can only be mounted in one desired orientation.

The above embodiment is described by way of example only. Many variations are possible without departing from the scope of the invention as defined in the appended claims. For example, whilst as shown in Figure 2 the rib 128 spans the entire depth of the ledge 114, this is not essential and the rib 128 could be configured to only span part of ledge 114; or a series of separate rib portions could be provided. It is also envisaged that the rib may also possess a different orientation to the one shown in Figure 2. Furthermore, whilst the present embodiment shown in Figures 2 and 3 has first, second and third abutment means 128, 130, 132, it should be understood that the panel 100 of the present invention may include only one of the abutment means 128, 130, 132; two or more of at least one of the abutment means 128, 130, 132; or indeed, any combination thereof.

## Claims

1. A combination of an injection moulded panel (100) and an article (1) mounted to the panel, the panel (100) comprising an integrally moulded mounting (102) for securing the article (1) to the panel, wherein the mounting comprises a pair of spaced mounting members (104, 106) for engagement with the article (1); wherein at least one of the mounting members (106) is configured to apply a resilient biasing force to the mounted article in use, so as to hold the article (1) in engagement with the other mounting member (104);
**characterized in that**:
each mounting member is configured to be insertable through a mounting aperture (12, 12') in respective mounting portions (11, 11') of said mounted article (1).

2. A combination of a panel and an article as claimed in claim 1, wherein one of the mounting members (104) comprises a detent engageable with a first mounting portion (11) of the mounted article (1); and the other mounting member (106) comprises a resilient clip engageable with a second mounting portion (11') of said mounted article.

3. A combination of a panel and an article as claimed in claim 2, wherein the detent is generally hook shaped, having an elongate shank (118) and a head (120) on a free end of the shank (118) extending outwardly from the shank in a first direction, and wherein the resilient clip is configured in use to generate a biasing force acting generally in a second direction opposite to the first direction when the clip is biased inwardly towards the detent from a neutral rest position.

4. A combination of a panel and an article as claimed in claim 3, wherein the resilient clip comprises a resilient arm (122) having a head portion (124) on its free end, the head portion (124) projecting outwardly from the arm (122) generally in the second direction opposite to the first direction.

5. A combination of a panel and an article according to any one of claims 1 to 4, wherein the spaced mounting members (104, 106) are each located on a support (108, 110) moulded integrally to a surface of the panel.

6. A combination of a panel and an article according to claim 5, comprising a bridging member (112) connecting the supports (108, 110).

7. A combination of a panel and an article as claimed in any one of claims 1 to 6, the mounting (102) further comprising an abutment (128) located between the mounting members (104, 106) for engagement with a surface of the article (1) mounted to the panel so as to place the article in tension between the mounting members (104, 106).

8. A combination of a panel and an article as claimed in any preceding claim, wherein the mounting (102) further comprises at least one abutment (130, 132) for engaging a surface of the mounted article (1) to limit the movement of the article in a direction perpendicular to the surface.

9. A combination of a panel and an article as claimed in any preceding claim, wherein the mounting (102) is configured such that the mounted article (1) may only be secured to the panel (100) in a single orientation.

10. A combination of a panel and an article as claimed in any preceding claim, wherein the mounting (102) is configured to secure the article (1) to the panel (100) with a snap fit.

11. A combination of a panel and an article as claimed in any preceding claim, wherein the panel is an interior trim panel for a vehicle.

12. A combination of a panel and an article as claimed in any preceding claim, wherein the mounted article comprises a first mounting portion (11) and a second mounting portion (11'), each mounting member (104, 106) being engaged with a respective one of the mounting portions; wherein at least one of the mounting members (106) applies a biasing force to the mounted article (1) to hold the article in engagement with the other of the mounting members (104).

13. A vehicle comprising a combination of a panel and an article as claimed in any preceding claim.

## Patentansprüche

1. Kombination aus einer Spritzformverkleidung (100) und einem an der Verkleidung befestigten Erzeugnis (1), wobei die Verkleidung (100) eine einstückig geformte Befestigung (102) zum Sichern des Erzeugnisses (1) an der Verkleidung umfasst, wobei die Befestigung ein Paar aus beabstandeten Befestigungselementen (104, 106) zum Ineingriffnehmen des Erzeugnisses (1) umfasst; wobei wenigstens eines der Befestigungselemente (106) konfiguriert ist, im Gebrauch eine elastische Vorspannkraft auf das befestigte Erzeugnis aufzubringen, um das Erzeugnis (1) mit dem anderen Befestigungselement (104) im Eingriff zu halten;
**dadurch gekennzeichnet, dass**:
jedes Befestigungselement konfiguriert ist, durch eine Befestigungsöffnung (12, 12') in jeweiligen Befestigungsabschnitten (11, 11') des befestigten Erzeugnisses (1) einführbar zu sein.

2. Kombination aus einer Verkleidung und einem Erzeugnis nach Anspruch 1, wobei eines der Befestigungselemente (104) eine Arretiervorrichtung umfasst, die einen ersten Befestigungsabschnitt (11) des befestigten Erzeugnisses (1) in Eingriff nehmen kann; und das andere Befestigungselement (106) einen elastischen Clip umfasst, der einen zweiten Befestigungsabschnitt (11') des befestigten Erzeugnisses in Eingriff nehmen kann.

3. Kombination aus einer Verkleidung und einem Erzeugnis nach Anspruch 2, wobei die Arretiervorrichtung im Allgemeinen hakenförmig ist und Folgendes aufweist: einen länglichen Schaft (118) und einen Kopf (120) an einem freien Ende des Schafts (118), der sich von dem Schaft aus in einer ersten Richtung nach außen erstreckt, und wobei der elastische Clip konfiguriert ist, im Gebrauch eine Vorspannkraft aufzubringen, die im Wesentlichen in einer zweiten Richtung wirkt, welche der ersten Richtung entgegengesetzt ist, wenn der Clip von einer neutralen Ruhestellung aus nach innen in Richtung der Arretiervorrichtung vorgespannt wird.

4. Kombination aus einer Verkleidung und einem Erzeugnis nach Anspruch 3, wobei der elastische Clip einen elastischen Arm (122) mit einem Kopfabschnitt (124) an seinem freien Ende umfasst, wobei der Kopfabschnitt (124) im Allgemeinen in der zweiten Richtung, die der ersten Richtung entgegengesetzt ist, von dem Arm (122) aus nach außen hervorragt.

5. Kombination aus einer Verkleidung und einem Erzeugnis nach einem der Ansprüche 1 bis 4, wobei die beabstandeten Befestigungselemente (104, 106) jeweils auf einer Stütze (108, 110) angeordnet sind, die einstückig an einer Oberfläche der Verkleidung ausgeformt ist.

6. Kombination aus einer Verkleidung und einem Erzeugnis nach Anspruch 5, umfassend ein Überbrückungselement (112), das die Stützen (108, 110) verbindet.

7. Kombination aus einer Verkleidung und einem Erzeugnis nach einem der Ansprüche 1 bis 6, wobei die Befestigung (102) ferner einen zwischen den Befestigungselementen (104, 106) angeordneten Anschlag (128) umfasst, um eine Oberfläche des an der Verkleidung befestigten Erzeugnisses (1) in Eingriff zu nehmen, um das Erzeugnis zwischen den Befestigungselementen (104, 106) unter Spannung zu setzen.

8. Kombination aus einer Verkleidung und einem Erzeugnis nach einem der vorhergehenden Ansprüche, wobei die Befestigung (102) ferner wenigstens einen Anschlag (130, 132) zum Ineingriffnehmen einer Oberfläche des befestigten Erzeugnisses (1) umfasst, um die Bewegung des Erzeugnisses in einer Richtung senkrecht zu der Oberfläche einzuschränken.

9. Kombination aus einer Verkleidung und einem Erzeugnis nach einem der vorhergehenden Ansprüche, wobei die Befestigung (102) derart konfiguriert ist, dass das befestigte Erzeugnis (1) nur in einer einzigen Ausrichtung an der Verkleidung (100) gesichert werden kann.

10. Kombination aus einer Verkleidung und einem Erzeugnis nach einem der vorhergehenden Ansprüche, wobei die Befestigung (102) konfiguriert ist, das Erzeugnis (1) mit einem Schnappverschluss an der Verkleidung (100) zu sichern.

11. Kombination aus einer Verkleidung und einem Erzeugnis nach einem der vorhergehenden Ansprüche, wobei die Verkleidung eine Innenverkleidung für ein Fahrzeug ist.

12. Kombination aus einer Verkleidung und einem Erzeugnis nach einem der vorhergehenden Ansprüche, wobei das befestigte Erzeugnis einen ersten Befestigungsabschnitt (11) und einen zweiten Befestigungsabschnitt (11') umfasst, wobei jedes Befestigungselement (104, 106) mit einem jeweiligen der Befestigungsabschnitte im Eingriff steht; wobei wenigstens eines der Befestigungselemente (106) eine Vorspannkraft auf das befestigte Erzeugnis (1) aufbringt, um das Erzeugnis mit dem anderen der Befestigungselemente (104) im Eingriff zu halten.

13. Fahrzeug, eine Kombination aus einer Verkleidung und einem Erzeugnis nach einem der vorhergehenden Ansprüche umfassend.

## Revendications

1. Combinaison d'un panneau moulé par injection (100) et d'un article (1) monté sur le panneau, le panneau (100) comprenant un montage moulé d'un seul tenant (102) pour arrimer l'article (1) au panneau, dans laquelle le montage comprend une paire d'organes de montage espacés (104, 106) pour un enclenchement avec l'article (1) ; dans laquelle au moins l'un des organes de montage (106) est configuré pour appliquer une force de sollicitation résiliente à l'article monté en utilisation, de façon à maintenir l'article (1) en enclenchement avec l'autre organe de montage (104) ;
**caractérisée en ce que** :
chaque organe de montage est configuré pour être insérable à travers une ouverture de montage (12, 12') dans des portions de montage (11, 11') respectives dudit article monté (1).

2. Combinaison d'un panneau et d'un article selon la revendication 1, dans laquelle l'un des organes de montage (104) comprend une détente enclenchable avec une première portion de montage (11) de l'article monté (1) ; et l'autre organe de montage (106) comprend une pince résiliente enclenchable avec une seconde portion de montage (11') dudit article monté.

3. Combinaison d'un panneau et d'un article selon la revendication 2, dans laquelle la détente est généralement en forme de crochet, ayant une tige allongée (118) et une tête (120) sur une extrémité libre de la tige (118) s'étendant vers l'extérieur depuis la tige dans une première direction, et dans laquelle la pince résiliente est configurée en utilisation pour générer une force de sollicitation agissant généralement dans une seconde direction opposée à la première direction lorsque la pince est sollicitée vers l'intérieur vers la détente depuis une position de repos neutre.

4. Combinaison d'un panneau et d'un article selon la revendication 3, dans laquelle la pince résiliente comprend un bras résilient (122) ayant une portion de tête (124) sur son extrémité libre, la portion de tête (124) faisant saillie vers l'extérieur depuis le bras (122) généralement dans la seconde direction opposée à la première direction.

5. Combinaison d'un panneau et d'un article selon l'une quelconque des revendications 1 à 4, dans laquelle les organes de montage espacés (104, 106) sont chacun situés sur un support (108, 110) moulé d'un seul tenant sur une surface du panneau.

6. Combinaison d'un panneau et d'un article selon la revendication 5, comprenant un organe de pont (112) raccordant les supports (108, 110).

7. Combinaison d'un panneau et d'un article selon l'une quelconque des revendications 1 à 6, le montage (102) comprenant en outre une butée (128) située entre les organes de montage (104, 106) pour un enclenchement avec une surface de l'article (1) monté sur le panneau de façon à placer l'article en tension entre les organes de montage (104, 106).

8. Combinaison d'un panneau et d'un article selon l'une quelconque des revendications précédentes, dans laquelle le montage (102) comprend en outre au moins une butée (130, 132) pour enclencher une surface de l'article monté (1) afin de limiter le déplacement de l'article dans une direction perpendiculaire à la surface.

9. Combinaison d'un panneau et d'un article selon l'une quelconque des revendications précédentes, dans laquelle le montage (102) est configuré de sorte que l'article monté (1) puisse uniquement être arrimé au panneau (100) dans une seule orientation.

10. Combinaison d'un panneau et d'un article selon l'une quelconque des revendications précédentes, dans laquelle le montage (102) est configuré pour arrimer l'article (1) au panneau (100) avec un encliquetage.

11. Combinaison d'un panneau et d'un article selon l'une quelconque des revendications précédentes, dans laquelle le panneau est un panneau de garniture intérieur pour un véhicule.

12. Combinaison d'un panneau et d'un article selon l'une quelconque des revendications précédentes, dans laquelle l'article monté comprend une première portion de montage (11) et une seconde portion de montage (11'), chaque organe de montage (104, 106) étant enclenché avec une portion respective des portions de montage ; dans laquelle au moins l'un des organes de montage (106) applique une force de sollicitation à l'article monté (1) pour maintenir l'article en enclenchement avec l'autre des organes de montage (104).

13. Véhicule comprenant une combinaison d'un panneau et d'un article telle que revendiquée dans l'une quelconque des revendications précédentes.
